# EUROPEAN PATENT APPLICATION

(11) **EP 2 492 573 A1**
(43) Date of publication of application: **29.08.2012**
(21) Application number: 12382059.9
(22) Date of filing: 21.02.2012
(51) Int. Cl.: F16L 37/24, F16L 41/03

(54) **Quick coupling manifold particularly adapted to heating or plumbing systems**

(30) Priority: 25.02.2011 ES 201130255
(71) Applicant: ORKLI, S. COOP., 20240 Ordizia (Gipuzkoa) (ES)
(72) Inventor: Aizpurua Macazaga, Amaia, 20230 Legazpi (ES); Aguado Meneses, José Manuel, 20240 Ordizia (ES)
(74) Representative: Igartua, Ismael

(57) **Abstract**

Quick coupling manifold adapted to heating or plumbing systems comprising at least a pair of modules (10, 20) that may be coupled together, each of which comprises an inlet pipe (11, 21) and an outlet pipe (12, 22), wherein at least one of the modules (10) comprises a housing on the outlet pipe (13) adapted to house the inlet pipe (21) of the other module (20), quick connection means (30) arranged on at least one end of each module (10, 20) adapted to couple the two modules together, and sealing means (40) adapted to ensure the water-tightness of the connection. The manifold comprises retention means (50) comprising a ring, resting on a seat (15b) on the housing, which comprises waves that may be deformed by the pressure exerted by the inlet pipe (21).

## Description

### FIELD OF THE ART

This invention relates to a quick coupling manifold particularly adapted to heating or plumbing systems.

### PRIOR ART

The use of manifolds is known in heating installations, including underfloor heating systems, and in plumbing installations. These manifolds may be either modular or non-modular.

Non-modular manifolds comprise a single body with different pipes to which different valves, flow regulators, etc. are connected. Although solutions of this type provide good water-tightness as they are basically assembled in factory, they are not very flexible for use in different installations. The use of modular manifolds has therefore become widespread, as they can be adapted to the different types of installations in a more optimised, economical way.

Different methods of coupling the modules together are also known. Thus, document EP1462581A1 describes modules joined by threading, while document EP2075496A1 describes a multi-thread coupling allowing two modules to be connected at different angular orientations to each other.

Document WO01/71236A1 describes a quick coupling manifold comprising several modules joined together by coupling means comprising a pair of claws arranged at one end of each module, each of which comprises a groove and a pair of diametrically opposed protuberances, so that each protuberance of the corresponding module is housed in the groove in the corresponding claw of the other module, thus maintaining the modules coupled together. To obtain water-tightness when the two modules are coupled together, an O-ring is inserted in the external part of the end close to the protuberances of one of the modules, this end being housed together with the O-ring inside the other module.

Finally, document EP1859193B1 describes a quick connection between modules making up a manifold, each module comprising a male quick connection element associated to a fluid inlet pipe on the module, and a female quick connection element associated to a main fluid outlet pipe on the module, so that the male element of one module can be quick-coupled to the female element of another module. The male element comprises annular segments and an annular recess adjacent to the said annular segments, which cooperates with a pair of annular segments and an annular recess comprised in the female element. The manifold also has a casing configured so that it compresses the annular recess of the female element, the pair of annular segments on the female element and the internal surface of the casing.

### DESCRIPTION OF THE INVENTION

The object of the invention is to provide a quick coupling manifold adapted to heating or plumbing systems, comprising:
- at least a pair of modules that may be coupled together, each of which comprises an inlet pipe and an outlet pipe, at least one of the modules comprising a distributor pipe, and wherein at least one of the modules - the first module - comprises a housing on the outlet pipe, adapted to house the inlet pipe of the other module, i.e. the second module,
- quick connection means arranged on at least one end of each module, adapted to couple the two modules together, and
- sealing means adapted to ensure the water-tightness of the connection between the two modules, the sealing means comprising at least one sealing joint coupled to the outside of the inlet pipe of the second module, which is housed in the housing of the first module.

The quick coupling manifold comprises retention means which comprise a ring arranged inside the housing resting on a seat on the housing, the ring comprising waves distributed over its surface area that may be deformed by the pressure exerted by the inlet pipe of the second module during the connection between the two modules.

In addition to maintaining the relative position of the two modules and thus cooperating to fix the modules, the retention means also cooperate to ensure the water-tightness of the connection between the two modules.

In this way, the installer avoids having to use any other additional means of insulation for the flexible joints, such as Teflon, cable glands or other means to ensure the water-tightness of the joint. It also makes the manifold compact and simple, facilitating its quick assembly and disassembly.

These and other advantages and characteristics of the invention will be made evident in the light of the figures and the detailed description of the invention.

### DESCRIPTION OF THE DRAWINGS

FIG. 1 shows a longitudinal section of a quick coupling manifold according to the invention, comprising at least two assembled modules.
FIG. 2 shows a perspective view of any of the modules comprised by the quick coupling manifold.
FIG. 3 shows a longitudinal section of the module shown in FIG. 2.
FIG. 4 shows a top view of the module shown in FIG. 2.
FIG. 5 shows a top view of sealing means comprised in the quick coupling manifold shown in FIG. 1.
FIG. 6 shows a front view of the sealing means shown in FIG. 4.

### DETAILED DESCRIPTION OF THE INVENTION

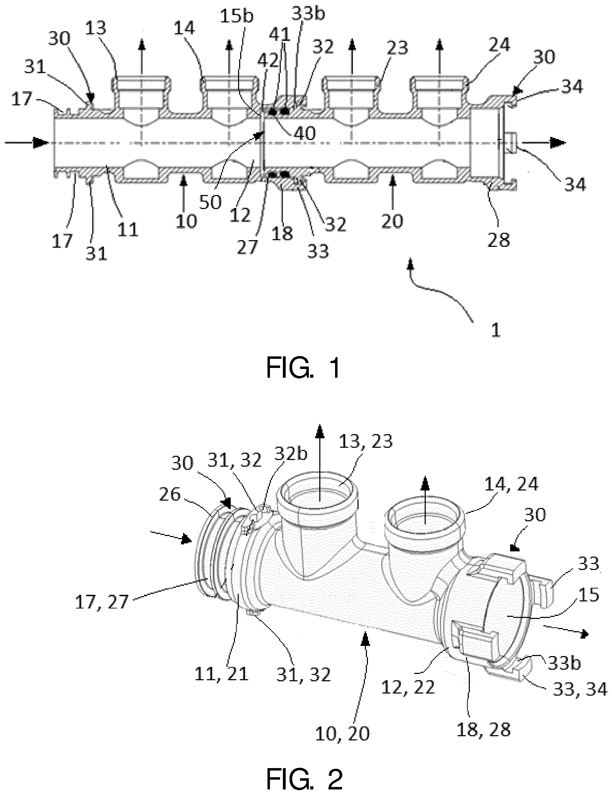

The quick coupling manifold 1, according to the invention, shown in figure 1, particularly adapted to heating or plumbing systems, comprises at least one pair of modules 10,20, made of a metal material, preferably brass, each comprising an inlet pipe 11, 21 for a fluid, preferably water, an outlet pipe 12, 22 through which most of the inlet fluid flows out, and at least one distribution pipe 13, 14, 23, 24 through which the inlet fluid is distributed to other pipes in the heating or plumbing system, not shown; modules 10, 20 can be coupled together.

In the embodiment shown in the figures, the quick coupling manifold 1 comprises a first module 10 and a second module 20, both modules 10, 20 being interchangeable. On each module 10, 11 the inlet pipe 11, 21 and the outlet pipe 12, 22 are arranged substantially coaxial, while the respective distribution pipes 13, 14, 23, 24 are arranged substantially orthogonal to the corresponding inlet pipe 11, 21 and outlet pipe 12, 22.

The first module 10 comprises a housing 15, arranged inside one end 18 of the outlet pipe 12, substantially cylindrical and coaxial to this outlet pipe 12, adapted to house one end 26 of the inlet pipe 21 of the second module 20.

The quick coupling manifold 1 also comprises quick coupling means 30 adapted to couple the first module 10 and the second module 20 together. The quick connection means 30 therefore comprise claws 33 on the end 18 of the outlet pipe 12 of the first module 10, which protrude axially from this end 18 and are preferably uniformly distributed along the external surface of this outlet pipe 12 and diametrically opposed to each other, and protuberances 31 on the outside of the inlet pipe 21 of the second module 20 which protrude radially and are diametrically opposed to each other. Each claw 33 comprises a recess 33b, which extends substantially radially along this claw 33, cooperating with the corresponding protuberance 31 in order to connect the two modules 10, 11 together in a fixed manner, the corresponding protuberance 31 being housed in the corresponding recess 33b.

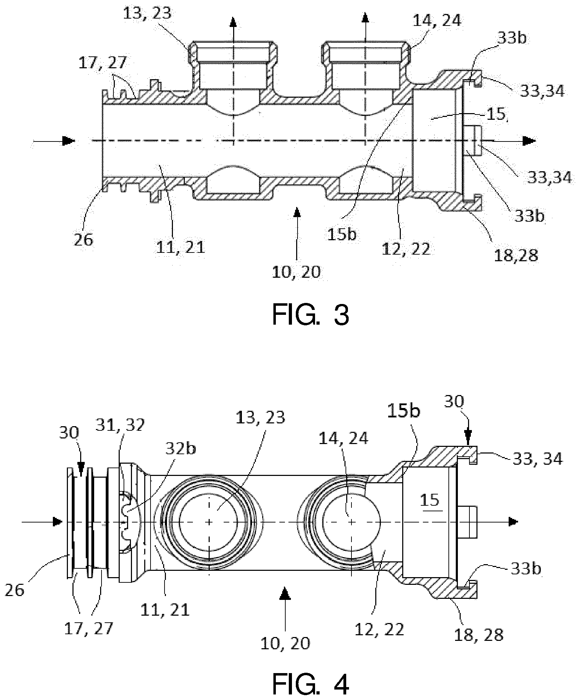

In the embodiment shown in figures 2 and 3, the first module 10 comprises 4 claws 33 substantially arranged at 90º; each protuberance 31 may be housed in a different recess 33b each time, and the second module 20 is thus orientable with respect to the first module 10, so that the installer may position the second module 20 in four different positions with respect to the first module 10, thus adapting to the geometry of the installation. In other configurations, not shown, the first module 10 could comprise two claws instead of four, substantially arranged diametrically to each other, so that the second module 20 would be orientable with respect to the first module 10 in two positions.

On the other hand, each protuberance 32 comprises grooves extending substantially orthogonal to the protuberance 32, which facilitate the task of disassembly for the corresponding installer.

Also, the manifold 1 comprises sealing means 40 adapted to ensure the water-tightness of the connection between the first module 10 and the second module 20. The sealing means 40 thus comprise substantially toric sealing gaskets 41, which are arranged inserted in substantially annular grooves 27, arranged on the outside of the inlet pipe 21 of the second module 20, between the end 26 of this inlet pipe 21 and the protuberances 31.

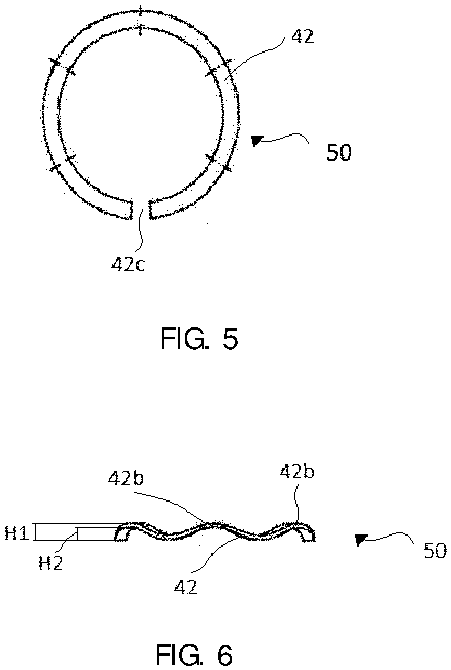

On the other hand, the manifold 1 comprises retention means 50, which in addition to cooperating to fix the modules 10, 20 together, also cooperate to ensure the water-tightness of the connection between the two modules 10, 20, as they maintain the relative position between the two modules 10, 20. The retention means 50 comprise an elastic ring 42, which rests on a seat 15b of the housing 15 of the first module 10, so that when the inlet pipe 21 of the second module 20 is inserted into the housing 15 and rotated with respect to the first module 10, preventing the protuberances 32 of the said second module 20 from intercepting the corresponding claws 33 of the first module 10, the said end 26 of the inlet pipe 21 presses against the ring 42. The ring 42, shown in detail in figures 5 and 6, has a substantially rectangular section, is open at one end and is made of a metal material. The ring 42 comprises waves 42b uniformly distributed over its surface, enabling the ring 42 to be deformed when the second module 20 is fitted to the first module 10, reducing the height of the ring 42 from a free height H1 to a compression height H2. The free height H1 has a maximum value of approximately 3 mm and a minimum value of approximately 0.5 mm, the minimum number of waves 42b for the maximum free height H1 being two and the maximum number of waves 42b for the minimum free height H1 being five.

Once the second module 20 has been partially inserted in the first module 10 and the ring 42 pressed against the base 15b of the housing 15, the installer may turn this second module 20 with respect to the first module 10 until the respective protuberances 32 of the second module 20 are housed in the corresponding recesses 33b of the first module 10. From this position, when the installer stops exerting pressure on the second module 20, the tensioned ring 42 maintains the respective protuberances 32 pressed against the respective claws 33, thus obtaining a fixed, water-tight joint between the two modules 10, 11.

In the embodiment shown in the figures, both the first module 10 and the second module 20 are intermediate modules, i.e. each one of them may be coupled to other intermediate modules by either of its two ends or to a final female module by one of its ends or to a final male module by the other end. Thus, the first module 10, which is interchangeable with the second module 20, also comprises a respective series of protuberances 31 on the inlet pipe 11, which protrude radially and are diametrically opposed to each other, adapted to cooperate with the claws of the corresponding module, this corresponding module being another intermediate module or a final male module, and substantially annular grooves 17 arranged on the outside of the inlet pipe 11 of the said first module 10, between the end 16 of the said inlet pipe 11 and the protuberances 31. Similarly, the second module 20 comprises claws 34 on one end 28 of the outlet pipe 22, which protrude axially from the said end 28, preferably uniformly distributed over the external surface of the said outlet pipe 22, adapted to cooperate with the respective protuberances of the corresponding module; this corresponding module is another intermediate module or a final female module.

In other embodiments not shown in the figures, the quick coupling manifold 1 may be joined to another quick coupling manifold to form a distribution unit, not shown.

Lastly, in other embodiments, not shown, the quick coupling manifold 1 may comprise a thermostat-convertible valve, a lockshield or even a flow regulator on each module.

## Claims

1. Quick coupling manifold adapted to heating or plumbing systems, comprising the following:
- at least a pair of modules (10, 20) that may be coupled together, each of which comprises an inlet pipe (11, 21) and an outlet pipe (12, 22), at least one of the modules (10, 20) comprising a distributor pipe (13, 14, 23, 24) and wherein at least one of the modules, the first module (10) , comprises a housing (15) on the outlet pipe (13), adapted to house the inlet pipe (21) of the other module, the second module (20),
- quick connection means (30) arranged on at least one end of each module (10, 20), adapted to couple the two modules (10, 20) together, and
- sealing means (40) adapted to ensure the water-tightness of the connection between the two modules (10, 20), the sealing means (40) comprising at least one sealing joint (41) coupled to the outside of the inlet pipe (21) of the second module (20), which is housed inside the housing (15) of the first module (10),
**characterised in that** it comprises retention means (50) which comprise a ring (42) arranged inside the housing (15) resting on a seat (15b) on this housing (15), the ring (42) comprising waves (42b) that may be deformed by the pressure exerted by the inlet pipe (21) of the second module (20), during the connection between the two modules (10, 20).

2. Quick coupling manifold according to the previous claim, wherein the waves (42b) are uniformly distributed over the surface of the ring (42).

3. Quick coupling manifold according to any of the previous claims, wherein the ring (42) is open at one end.

4. Quick coupling manifold according to any of the previous claims, wherein the ring (42) has a maximum free height (H1) of approximately 3 mm and a minimum of two waves (42b).

5. Quick coupling manifold according to any of the previous claims,wherein the ring (42) has a minimum free height (H1) of approximately 0.5 mm and a maximum of five waves (42b).

6. Quick coupling manifold according to any of the previous claims, wherein the quick connection means (30) comprise at least two substantially radial protuberances (32) on the inlet pipe (21) of the second module (20) and at least two axially protruding claws (33) on the outlet pipe (12) of the first module (10), each claw (33) comprising a recess (33b) inside which the respective protuberance (32) of the second module (20) is housed, with the two modules (10, 20) remaining fixed to each other.

7. Quick coupling manifold according to the previous claim, wherein the claws (33) of the first module (10) and the protuberances (32) of the second module (20) are respectively arranged diametrically opposed to each other.

8. Quick coupling manifold according to claim 6, wherein the quick connection means (30) comprise four claws (33) on the outlet pipe (12) of the first module (10), the second module (20) being orientable with respect to the first module (10).

9. Quick coupling manifold according to any of the previous claims, wherein the first module (10) and the second module (20) are interchangeable modules.

10. Quick coupling manifold according to any of the previous claims, wherein each one of the modules (10, 20) is made of metal.
